# FASCICULE DE BREVET EUROPEEN

(11) **EP 0 932 474 B1**
(45) Date de publication et mention de la délivrance du brevet: **22.11.2000**
(21) Numéro de dépôt: 97909381.2
(22) Date de dépôt: 10.10.1997
(51) Int. Cl.: B23Q 7/14, B23Q 11/08, B23Q 1/54

(54) **DISPOSITIF ROTATIF DE CHANGEMENT DE PIECES A USINER D'UNE MACHINE-OUTIL**
ROTATIONSVORRICHTUNG ZUM WECHSELN VON MIT EINER WERKZEUGMASCHINE ZU BEARBEITENDEN WERKSTÜCKEN
ROTARY DEVICE FOR CHANGING PARTS TO BE MACHINED BY A MACHINE-TOOL

(30) Priorité: 17.10.1996 FR 9612925
(43) Date de publication de la demande: 04.08.1999
(73) Titulaire: Renault Automation Comau, 92365 Meudon La Forêt Cedex (FR)
(72) Inventeur: LAUR, Raymond, F-81290 Viviers les Montagnes (FR)
(74) Mandataire: Richebourg, Michel François
(86) Numéro de dépôt international: FR9701806
(87) Numéro de publication internationale: WO9817436

(56) Documents cités:
- EP-A- 0 409 085
- US-A- 4 373 406
- US-A- 4 797 990

## Description

La présente invention se réfère à un dispositif de changement de pièces à usiner d'une machine outil selon le préambule de la revendication 1 et comme connu par exemple du document US-A-4 797 990.

La présente invention a trait au domaine des machines-outils et notamment aux adaptations permettant de réaliser le changement de pièces à usiner en remplissant les conditions de temps de cycle et d'étanchéité répondant aux critères d'intégration nécessaires plus particulièrement à l'utilisation d'une machine-outil d'usinage à très grande vitesse.

Classiquement, les dispositifs de changement de pièces dits de "palettisation" ont pour fonction l'approvisionnement en pièces à usiner des machines-outils : le dispositif amène la pièce à usiner sur le poste d'usinage de la machine-outil, la machine-outil réalise la gamme d'usinage puis la pièce usinée est évacuée et remplacée par une nouvelle pièce à usiner.

Les dispositifs existant dits "pas à pas" sont très adaptés pour l'usinage en série et à la configuration pour des machines-outils d'usinage en très grande série. Ces machines possèdent des têtes d'outils multi-broches qui assurent la réalisation à très grande vitesse d'une gamme d'usinage.

Ces machines-outils faisant l'objet d'améliorations constantes en rapidité et en précision et du fait que de nouvelles machines mono-broches plus flexibles, plus rapides, et plus précises apparaissent, les dispositifs existants sont difficilement adaptables car il est désormais impératif qu'ils deviennent plus flexibles, plus rapides et plus précis. En effet, la flexibilité augmentée de ces machines entraîne, entre autres, une différence de temps d'usinage d'une machine à l'autre et le procédé technique de convoyage "pas à pas" n'est plus utilisable dans une telle configuration.

Un autre contrainte à laquelle doit s'adapter maintenant un dispositif de changement de pièces, est l'usinage à sec. En effet, l'usinage à sec, c'est à dire sans projection de liquide, supprime le moyen d'entraînement usuel des copeaux de sorte que ceux-ci s'évacuent beaucoup moins facilement et deviennent donc un facteur plus important de grippage des composants de la machine, de faussage des références et de mauvais fonctionnement.

Le concept des dispositifs de "palettisation" tournants présents devant chaque machine et servant d'interfaces entre la chaîne de convoyage classique des pièces et une machine-outil d'usinage à grande vitesse, semble être la meilleure solution au problème de flexibilité. Cependant, un inconvénient de ces dispositifs est le grand volume libre demandé, au niveau du poste d'usinage, par son installation, puisque la rotation de ces dispositifs demande un volume cylindrique dont la base aurait pour diamètre la longueur du palettiseur, encombrement nettement plus important qu'un palettiseur classique en translation. Cet inconvénient a souvent obligé les techniciens du bureau d'outillage à concevoir des montages d'usinage moins encombrants.

Le problème d'étanchéité, et notamment lors d'un usinage à sec, est plus complexe pour les palettiseurs rotatifs puisqu'ils amènent une palette dans une zone d'usinage par un mouvement rotatif à grande vitesse ce qui est difficile à rendre étanche, du fait que toute surface du palettiseur en appui sur la machine-outil devient un obstacle au moment de la rotation dudit palettiseur. L'étanchéité des dispositifs existants est, lorsqu'elle existe, un compromis pas toujours satisfaisant et non acceptable au vu des conditions qu'exige aujourd'hui l'usinage à très grande vitesse.

Partant de cet état de fait, la demanderesse a mené des recherches sur les palettiseurs changeurs de pièces qui ont abouti sur un nouveau concept de dispositif rotatif assurant le changement de pièces à usiner d'une machine-outil, dans les meilleures conditions d'étanchéité, de rapidité et d'encombrement.

Le dispositif rotatif de changement de pièces à usiner d'une machine-outil de l'invention est du type de celui constitué d'un plateau qui, comportant au moins deux supports de palette disposés de préférence à intervalle angulaire régulier destinés à recevoir chacun une palette porte-pièce, est monté rotatif entre le poste d'usinage de la machine-outil et le poste d'alimentation des palettes porte-pièce disposé face audit poste d'usinage.

Selon le concept fondamental de l'invention, un tel dispositif est remarquable en ce que le susdit plateau- support de palettes est monté d'une part, pivotant autour de son axe central et d'autre part, basculant entre une position horizontale et une position inclinée par rapport à l'horizontale. Cette caractéristique a pour grand avantage de décaler vers le centre du dispositif rotatif les éléments solidaires du plateau introduits dans le poste d'usinage à des fins de dégagement de ce dernier, afin de pouvoir réaliser la libre rotation du plateau. Le basculement du plateau a pour conséquence un déplacement vertical et horizontal de l'extrémité du plateau introduit dans le poste d'usinage qui lui permet de se dégager suffisamment de celui-ci pour engager la rotation.

Selon une caractéristique particulièrement avantageuse de l'invention, le plateau-support de palettes dudit dispositif est monté basculant entre le poste d'usinage de la machine-outil et le poste d'alimentation des palettes porte-pièce, autour d'un axe horizontal théorique disposé orthogonalement à l'axe d'alignement desdits postes. Ainsi, le basculement se fait de bas en haut et de haut en bas, permettant l'utilisation d'un module de bridage standard intégrant des références qui servent de positionnement pour les palettes sur lesquelles sont bridées les pièces par l'intermédiaire d'un montage d'usinage classique. Un autre avantage non négligeable de l'inclinaison du plateau du dispositif rotatif de changement de pièces de l'invention, est de dégager suffisamment les éléments liés au plateau introduits dans le poste d'usinage de la machine-outil pour assurer leur rotation, afin que les éléments solidaires de l'ensemble tournant puissent être en appui sur la machine

Selon une autre caractéristique particulièrement avantageuse de l'invention, le plateau-support de palettes dudit dispositif est monté basculant de sa position horizontale de repos où une palette est positionnée sur les références du module de bridage du poste d'usinage de la machine-outil à une position inclinée au dessus dudit module de bridage où la palette est libérée desdites références. De plus, le mouvement de rotation du susdit plateau est avantageusement actionné pendant la position inclinée dudit plateau. Contrairement aux dispositifs de "palettisation" classiques, l'inclinaison de l'ensemble plateau avec la palette a un effet de dégagement permettant de la faire pivoter sans avoir à diminuer les dimensions du montage d'usinage assurant le serrage de la pièce. De plus, en dégageant les différents éléments du plateau du poste d'usinage avant la rotation, l'inclinaison du plateau permet de garder à proximité du poste d'usinage, sans en gêner le mouvement de rotation, le magasin d'outils indispensable au fonctionnement optimal d'une machine-outil. Ainsi, après usinage, le plateau s'incline de façon à dégager la palette porte-pièce des références du module de bridage de la machine-outil pour permettre sans obstacle la rotation du plateau qui positionne une nouvelle palette au-dessus des références tout en faisant passer la palette de la pièce usinée sur le poste de chargement/déchargement. Une fois la rotation réalisée, le plateau revient alors en position horizontale de façon à permettre le positionnement et le bridage de la nouvelle palette et le déchargement de l'ancienne.

Selon une autre caractéristique particulièrement avantageuse, le susdit axe théorique horizontal suit un mouvement dont la direction est parallèle au plan vertical passant par l'axe d'alignement desdits postes. La mobilité de cet axe théorique permet de proposer au plateau un centre instantané de rotation de sorte que le dégagement des pièces du poste d'usinage peut commencer suivant une trajectoire sensiblement verticale, ce qui permet l'utilisation de toutes les sortes de références sur le module de bridage. De plus, la trajectoire de dégagement peut être optimisée suivant les besoins et les obstacles existants et à venir lors de la rotation du plateau-support de palettes et l'inclinaison peut être réduite grâce au décalage de l'axe.

Avantageusement, le susdit axe théorique horizontal autour duquel bascule le susdit plateau est situé à proximité du susdit poste d'alimentation permettant ainsi un rayon de courbure plus grand au niveau du poste d'usinage que si l'axe de rotation se trouvait au centre du plateau.

L'inclinaison du plateau et le dégagement qu'il provoque, ont pour autre grand avantage de permettre d'équiper le plateau d'un capotage se composant d'une part, d'une partie inférieure assurant la couverture complète du plateau tout en laissant libre les supports de palette et d'autre part, d'une partie supérieure définissant une enveloppe de protection autour desdits supports de palette et aménagée sur ses parois verticales destinées à être face au poste d'usinage, d'ouvertures pour autoriser l'accès à chaque support de palettes. Ce capotage, qui sera développé dans la description appuyée sur les dessins, a pour principale fonction d'éviter la projection des copeaux sur les pièces et le mécanisme de bridage.

Selon une autre caractéristique particulièrement avantageuse de l'invention visant à améliorer les conditions de sécurités et l'automatisation, la connexion et la déconnexion des circuits servant au bridage de la palette sont assujettis aux mouvements de basculement du susdit plateau de changement de pièces.

Les concepts fondamentaux de l'invention venant d'être exposés ci-dessus dans leur forme la plus élémentaire, d'autres détails et caractéristiques de l'invention, ressortiront plus clairement à la lecture de la description qui suit donnant à titre d'exemple non limitatif et en regard des dessins annexés, un mode de réalisation d'un dispositif rotatif de changement de pièces à usiner d'une machine-outil conforme à l'invention, comportant à titre illustratif deux supports de palettes.

Cette description se réfère aux dessins annexés sur lesquels :
La figure 1 est une vue de côté schématique d'un tel dispositif rotatif de changement de pièces à usiner d'une machine-outil, en position horizontale,
La figure 2 est une vue de côté schématique du dispositif rotatif de la figure 1, en position inclinée,
La figure 3 est une vue en perspective d'un tel dispositif rotatif en position inclinée devant le poste d'usinage de la machine-outil, muni de son capotage,
La figure 4 est une vue en perspective du capotage seul de ce dispositif rotatif.

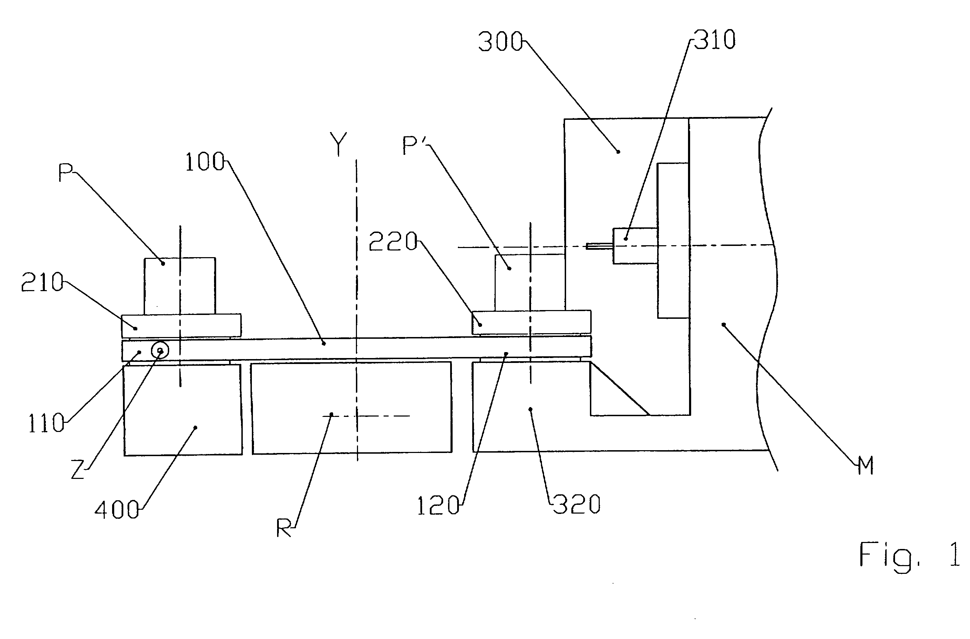

Tel qu'illustré sur la figure 1, le dispositif rotatif de changement de pièces à usiner de l'invention référencé dans son ensemble R est constitué d'un plateau 100 comprenant deux supports de palette 110 et 120 disposés à 180° l'un de l'autre et qui sont destinés à accueillir deux palettes porte-pièce 210 et 220 sur lesquelles sont montées, par l'intermédiaire d'un montage de bridage, deux pièces à usiner P et P'. Ce dispositif rotatif R est situé entre, d'une part, le poste d'usinage 300 d'une machine-outil référencée dans son ensemble M et comportant un coulant porte électro-broche 310 et un module de bridage 320, et d'autre part, un poste d'alimentation des palettes porte-pièce illustré par son module de dépose 400.

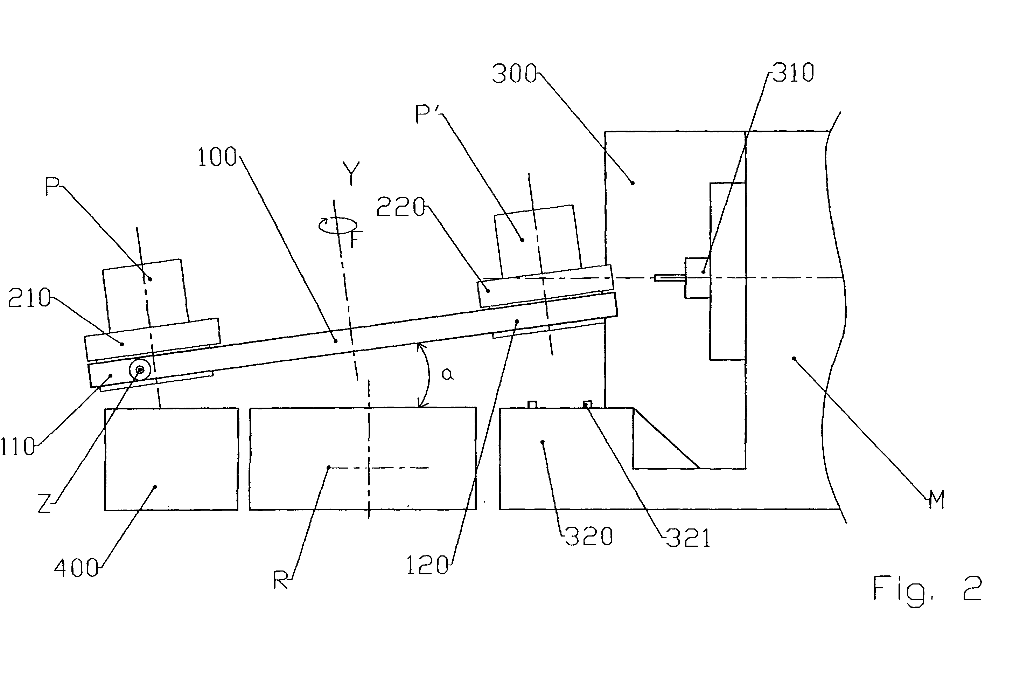

Selon la caractéristique principale de l'invention, le plateau-support de palettes 100 est monté d'une part, pivotant autour de son axe central Y et d'autre part basculant entre une position horizontale illustrée sur la figure 1 et une position inclinée par rapport à l'horizontale illustrée sur la figure 2. Le susdit plateau 100 est monté basculant d'un angle "a" entre le poste d'usinage 300 et le module de dépose du poste d'alimentation des palettes, autour d'un axe théorique horizontal Z disposé orthogonalement à l'axe d'alignement desdits postes.
Cet axe théorique, situé à proximité du module de dépose 400, suit un mouvement (flèche V) dont la direction est parallèle au plan vertical passant par l'axe d'alignement desdits postes, afin d'assurer au plateau 100 une trajectoire de basculement optimisée qui permette au plateau 100 un début de dégagement vertical. Cette trajectoire d'élévation et de basculement permet au susdit plateau 100 de basculer de sa position horizontale de repos où une palette 220 est positionnée sur les références 321 du module de bridage 320 de façon à ce que la machine-outil M puisse usiner la pièce P' (cf. figure 1) vers une position inclinée d'un angle "a" au dessus dudit module de bridage 320 où la palette 220 est libérée des références 321 et où le support 120 du plateau 100 avec la palette porte-pièce 220 sur laquelle est montée la pièce P' venant d'être usinée sont suffisamment dégagées.

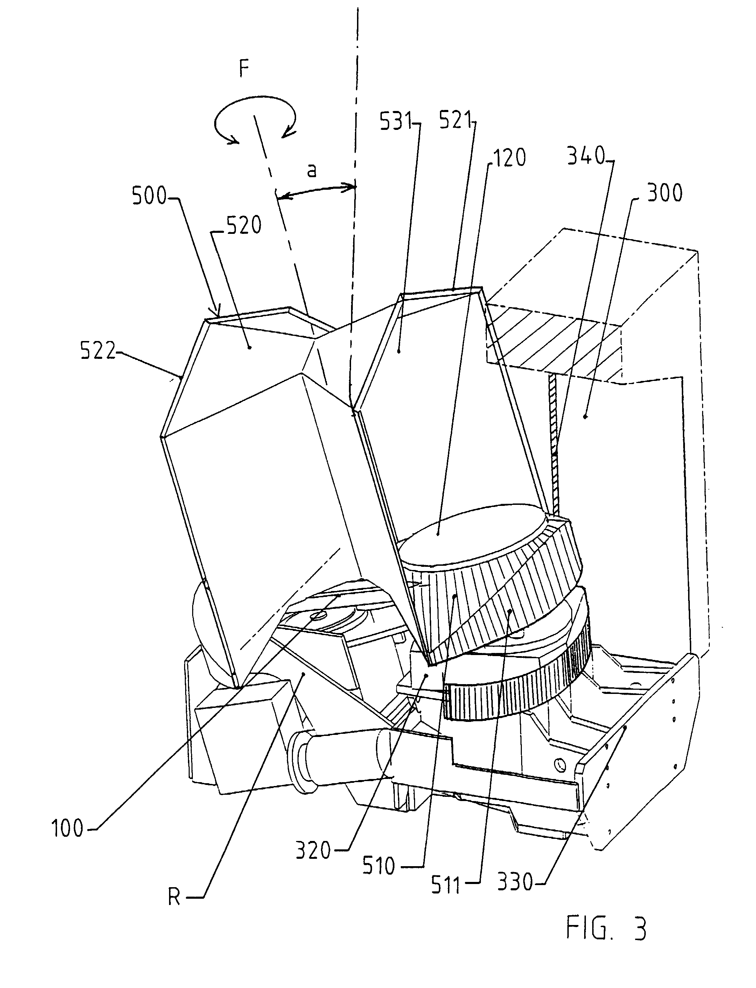

Une fois que l'angle d'inclinaison "a" est atteint, le plateau 100 réalise une rotation à 180° suivant la flèche F (cf figures 2 et 3) autour dudit axe central Y incliné d'un angle "a" afin que la palette porte-pièce 220 portant la pièce usinée P' vienne se positionner au-dessus du module de dépose 400 à des fins de déchargement et que la palette porte-pièce 210 portant la pièce non-usinée P se positionne au-dessus du module de bridage 320 du poste d'usinage 300, de sorte que lorsque le basculement "retour" est opéré, la palette porte-pièce 210 soit bridée sur les références 321 et la palette 220 soit évacuée à des fins de chargement d'une palette avec une nouvelle pièce à usiner.

Comme on peut le voir sur le dessin de la figure 3, le plateau 100 du dispositif rotatif de changement de pièces R est muni d'un capotage 500. En effet, grâce à la cinématique de basculement et de dégagement qu'il provoque, le dispositif de l'invention peut non seulement comporter des montages d'usinage standards mais aussi être équipé d'un capotage original, à des fins de protection optimale garantissant l'étanchéité aux copeaux.

Ce capotage 500 se compose d'une part, d'une partie inférieure 510 assurant la couverture complète du plateau 100 tout en laissant accessibles par le haut les deux supports de palette 110 et 120 de ce dernier et d'autre part, d'une partie supérieure 520 définissant une enveloppe de protection autour desdits supports de palette 110 et 120 et aménagées sur ses parois verticales destinées à être face au poste d'usinage 300, de deux ouvertures 521 et 522 pour autoriser l'accès à chaque support de palette 110 et 120. Ces ouvertures 521 et 522 réalisées dans la partie supérieure du capotage 500 ont pour fonction de permettre l'accès de l'électro-broche porté par le coulant 310 du poste d'usinage 300 pour réaliser l'usinage et du dispositif de chargement/déchargement du module de dépose 400 du poste d'alimentation pour évacuer et remplacer la pièce usinée. La couverture complète du plateau 100 par la partie inférieure 510 du capotage 500 a notamment pour avantage de protéger contre la projection de copeaux toute la partie cinématique du dispositif rotatif R se situant au-dessous du plateau 100. A cet effet, cette partie inférieure 510 du capotage 500 est façonnée en tronc de cône dont les parois latérales débordantes 511 protègent le mécanisme du susdit module de bridage 320 du poste d'usinage 300 de la machine-outil M quelle que soit la position du susdit plateau-support de palettes 100 (même en position inclinée) et dont la paroi recouvrant le plateau 100 autour desdits supports de palette 110 et 120 est façonnée d'une succession de plans 512 orientés de manière à ce que les copeaux soient dirigés par gravité dans des bacs de récupération correspondants. Ainsi, même lorsque le plateau 100 est basculé au maximum, le module de bridage 320 du poste d'usinage 300, ses références de localisation 321 et les mécanismes du dispositif rotatif de changement de pièces R sont protégés de la chute de copeaux puisque l'inclinaison des plans 512 canalise par gravité ceux-ci, particulièrement avantageux lors d'un usinage à sec.

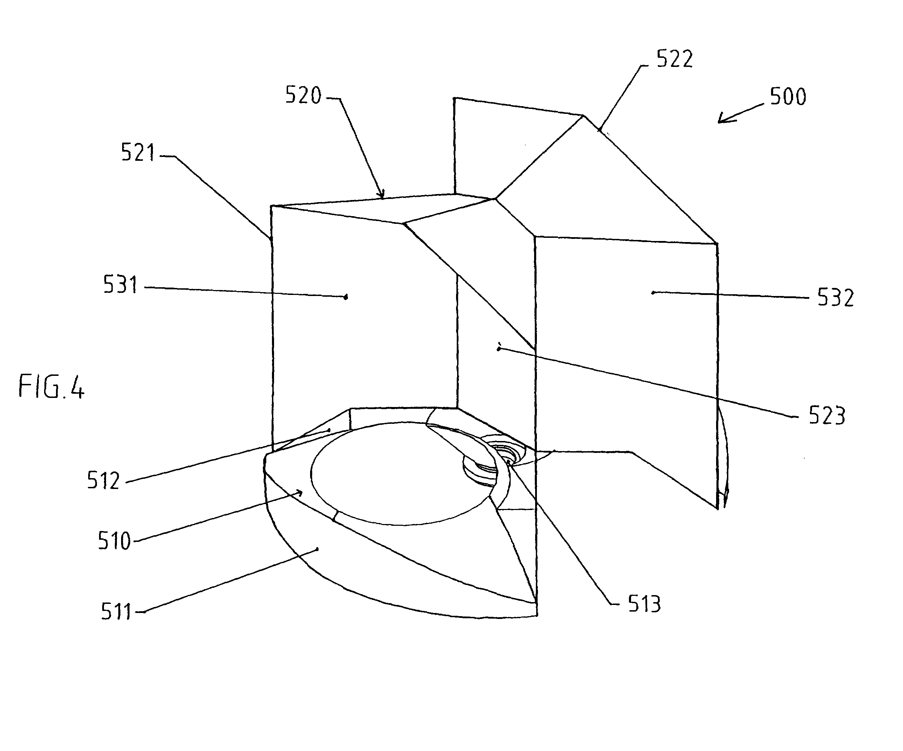

Telle qu'illustrée sur le dessin de la figure 4, la susdite enveloppe de protection formant la partie supérieure 520 du capotage 500 est cloisonnée par une paroi verticale de séparation 523 de façon à délimiter deux compartiments 531 et 532 assurant l'isolement desdits supports de palette 110 et 120 entre eux. L'isolement de ces deux supports de palettes a pour avantage, par exemple, d'éviter la projection des copeaux résultant de l'usinage de la pièce P' fixée à une palette 220, sur le support de palette libéré lors de la phase de déchargement et de chargement de la palette porte-pièce. La présence de copeaux sur les supports de palettes 110 ou 120 pourrait avoir des conséquences de mauvais positionnement de la palette sur son support et donc de mauvais positionnement de la palette sur les références 321 du module de bridage 320.

Selon un mode de réalisation particulièrement avantageux de l'invention, la partie inférieure 510 du capotage 500 comprend un orifice central 513 situé au-dessus d'un bac de récupération et vers lequel s'orientent les plans 512 situés dans la moitié intérieure de chaque compartiment 531 et 532 de l'enveloppe supérieure 520 de protection. Les plans 512 situés dans la moitié extérieure desdits compartiment s'inclinent, quant à eux, vers l'extérieur du dispositif rotatif à des fins d'évacuation dans un bac de récupération intégré au poste d'usinage 300 (cf figure 3). La présence d'un orifice 513 dans la partie intérieure des compartiments 531 et 532 du capotage 500 a pour avantage d'assurer l'évacuation des copeaux accumulés généralement à cet endroit. L'expansion angulaire "a" du plateau 100 a, en outre, pour avantage d'accentuer l'inclinaison des pentes des plans 512 situés sur la moitié intérieure du compartiment concerné par l'usinage, parachevant ainsi l'évacuation des copeaux. Les plans 512 situés sur la partie extérieure des compartiments 531 et 532 dirigeront, quant à eux, les copeaux projetés sur leur face vers le bac 330 lequel pourra être relié au bac d'évacuation situé au-dessous de l'orifice central 513.

Les contours de l'ouverture d'accès 521 ou 522 de chaque compartiment 531 et 532 de l'enveloppe de protection supérieure dudit capotage 500 sont délimités en adéquation avec les contours d'une partie fixe 340 solidaire de la cage d'usinage de la susdite machine-outil M lorsque la palette porte-pièce 210 ou 220 est en position sur le module de bridage 320 du poste d'usinage 300 de la machine-outil de façon à former avec ladite cage, une enceinte hermétique pendant l'opération d'usinage. En effet, le dégagement du plateau-support de palettes 100 autorise une liaison plan sur plan entre le capotage 500 et la partie fixe 340 s'adaptant au profil du capotage 500. Une liaison plan sur plan est garante de l'étanchéité optimale du poste d'usinage 300 que ce soit en haut ou sur les côtés, liaison impossible à réaliser sur les dispositifs tournants classiques car la rotation dans un plan horizontal était entravée par toutes les surfaces en contacts.

Un autre avantage lié à la configuration du capotage 500 ne réalisant une enveloppe de protection qu'autour de deux supports de palette 110 et 120, est de libérer deux espaces symétriques et libres de tout élément entre les parois extérieures des deux compartiments exploitables pour d'autres opérations avec d'une rotation adéquate du plateau 100 autour de son axe central Y.

On comprend que le dispositif rotatif de changement de pièces à usiner d'une machine-outil qui vient d'être ci-dessus décrit et représenté, l'a été en vue d'une divulgation plutôt que d'une limitation. Bien entendu, divers aménagements, modifications et améliorations pourront être apportés à l'exemple ci-dessus, sans pour autant sortir du cadre de l'invention comme defini dans les revendications.

Afin de permettre une meilleure compréhension des dessins, une liste des références avec leurs légendes est ci-après énumérée.
- R: Dispositif rotatif
- M: Machine-outil d'usinage
- 100: Plateau
- 110, 120: Supports de palette
- 210, 220: Palettes porte-pièce
- 300: Poste d'usinage
- 310: Coulant porte électro-broche
- 320: Module de bridage
- 321: Références de localisation
- 330: Bacs de récupération de copeaux
- 340: Partie fixe solidaire du poste d'usinage et s'adaptant aux contours des ouvertures pratiquées dans le capotage 500
- 400: Module de dépose
- 500: Capotage
- 510: Partie inférieure du capotage
- 511: Paroi débordante de la partie inférieure du capotage
- 512: Plans inclinés guidant les copeaux vers les bacs et orifices
- 513: Orifice central de récupération des copeaux
- 520: Partie supérieure du capotage
- 521, 522: Ouvertures d'accès pratiquées dans le capotage
- 523: Paroi verticale de séparation
- 531, 532: Compartiments de la partie supérieure 520
- Y: Axe central de rotation du plateau
- Z: Axe théorique horizontal mobile de basculement du plateau
- Fléche F: Mouvement de rotation suivant l'axe Y du plateau
- Flèche V: Mouvement de l'axe théorique Z
- "a": Angle d'inclinaison du plateau après basculement

## Revendications

1. Dispositif rotatif (R) de changement de pièces à usiner d'une machine-outil (M), du type de celui constitué d'un plateau (100) qui, comportant au moins deux supports de palette (110 et 120) disposés à intervalle angulaire régulier destinés à recevoir chacun une palette porte-pièce (210 et 220), est monté rotatif (flèche F) entre le poste d'usinage (300) de la machine-outil (M) et le poste d'alimentation (400) des palettes porte-pièce (210 et 220) disposé face audit poste d'usinage (300), **CARACTERISE PAR LE FAIT QUE** le susdit plateau (100) est monté d'une part, pivotant (flèche F) autour de son axe central (Y) et d'autre part, basculant entre une position horizontale et une position inclinée (angle "a") par rapport à l'horizontale.

2. Dispositif selon la revendication 1, **CARACTERISE PAR LE FAIT QUE** le susdit plateau (100) est monté basculant entre le poste d'usinage (300) de la machine-outil (M) et le poste d'alimentation (400) des palettes porte-pièce (210 et 220) autour d'un axe théorique horizontal (Z) disposé orthogonalement à l'axe d'alignement desdits postes (300 et 400).

3. Dispositif selon la revendication 1, **CARACTERISE PAR LE FAIT QUE** le susdit plateau (100) est monté basculant de sa position horizontale de repos où une palette (210 ou 220) est positionnée sur les références (321) du module de bridage (320) du poste d'usinage (300) de la machine-outil (M) à une position inclinée au dessus dudit module de bridage (320) où la palette (210 ou 220) est libérée desdites références (321).

4. Dispositif selon la revendication 1, **CARACTERISE PAR LE FAIT QUE** le mouvement de rotation (flèche F) du susdit plateau (100) est actionné pendant la position inclinée (angle "a") dudit plateau (100).

5. Dispositif selon les revendications 1 et 2, **CARACTERISE PAR LE FAIT QUE** le susdit axe théorique horizontal (Z) suit un mouvement (flèche V) dont la direction est parallèle au plan vertical passant par l'axe d'alignement desdits postes (300 et 400).

6. Dispositif selon les revendications 1 et 2, **CARACTERISE PAR LE FAIT QUE** le susdit axe théorique horizontal (Z) autour duquel bascule le susdit plateau (100) est situé à proximité du susdit poste d'alimentation (400).

7. Dispositif selon l'ensemble des revendications 1 à 6, **CARACTERISE PAR LE FAIT QU'** il comprend un capotage (500) se composant d'une part d'une partie inférieure (510) assurant la couverture complète du plateau (100) tout en laissant libre lesdits supports de palette (110 et 120) et d'autre part, d'une partie supérieure (520) définissant une enveloppe de protection autour desdits supports de palette (110 et 120) et aménagée sur ses parois verticales destinées à être face au poste d'usinage (300), d'ouvertures (521 et 522) pour autoriser l'accès à chaque support de palettes (110 et 120).

8. Dispositif selon la revendication 7, **CARACTERISE PAR LE FAIT QUE** la partie inférieure (510) du capotage (500) est façonnée en tronc de cône dont les parois latérales débordantes (511) protègent le mécanisme du susdit module de bridage (320) du poste d'usinage (300) de la machine-outil (M) quelle que soit la position du susdit plateau (100) et dont la paroi recouvrant le plateau (100) autour desdits supports de palette (110 et 120) est façonnée d'une succession de plans (512) orientés de manière à ce que les copeaux soient dirigés par gravité dans des bacs de récupération correspondants.

9. Dispositif selon la revendication 7, **CARACTERISE PAR LE FAIT QUE** la susdite enveloppe de protection formant la partie supérieure (520) du capotage (500) est cloisonnée d'au moins une séparation verticale (523) de façon à délimiter des compartiments (531 et 532) assurant l'isolement desdits supports de palette (110 et 120) entre eux.

10. Dispositif selon les revendications 7 et 8, **CARACTERISE PAR LE FAIT QUE** la partie inférieure (510) du capotage (500) comprend un orifice central (513) situé au-dessus d'un bac de récupération et vers lequel s'orientent les plans (512) situés dans la moitié intérieure de chaque compartiment (531 et 532) de l'enveloppe de protection, les plans (512) situés dans la moitié extérieure desdits compartiment (531 et 532) s'inclinant quant à eux vers l'extérieur du dispositif (R) à des fins d'évacuation dans un bac de récupération (330).

11. Dispositif selon les revendications 7 et 9, **CARACTERISE PAR LE FAIT QUE** les contours de l'ouverture d'accès (521 et 522) de chaque compartiment de l'enveloppe de protection dudit capotage (500) sont délimités en adéquation avec les contours d'une partie fixe (340) solidaire de la cage d'usinage de la susdite machine-outil (M) lorsque la palette porte-pièce (210 ou 220) est en position sur le module de bridage (320) du poste d'usinage (300) de la machine-outil (M) de façon à former avec ladite cage, une enceinte hermétique pendant l'opération d'usinage.

12. Dispositif selon l'une quelconque des revendications 1 à 11, **CARACTERISE PAR LE FAIT QUE** la connexion et la déconnexion des circuits servant au bridage de la palette (210 ou 220) sont assujetties aux les mouvements de basculement du susdit plateau (100) de changement de pièces.

## Patentansprüche

1. Rotationsvorrichtung (R) zum Wechseln von mit einer Werkzeugmaschine (M) zu bearbeitenden Werkstücken, die aus einer Plattform (100) besteht, welche wenigstens zwei Palettenträger (110 und (120) aufweist, die unter einem vorgegebenen Winkelabstand voneinander angeordnet sind und die jeweils zur Aufnahme einer Werkstückpalette (210 und 220) dienen und die drehbar (Pfeil F) zwischen der Bearbeitungsstation (300) der Werkzeugmaschine (M) und der dieser Bearbeitungsstation (300) gegenüberliegenden Bestückungsstation (400) für die Werkstückpaletten (210 und 220) angeordnet ist, dadurch gekennzeichnet, dass die Plattform (100) einerseits drehbar (Pfeil F) um ihre Mittenachse (Y) und andererseits verschwenkbar zwischen einer waagrechten Stellung und einer zur Waagrechten geneigten Stellung (Winkel a) angeordnet ist.

2. Vorrichtung nach Anspruch 1, dadurch gekennzeichnet, dass die Plattform (100) verschwenkbar zwischen der Bearbeitungsstation (300) der Werkzeugmaschine (M) und der Bestückungsstation (400) für die Werkstückpaletten (210 und 220) um eine theoretische waagrechte Achse (Z) angeordnet ist, welche senkrecht zur Verbindungsachse zwischen den Stationen (300 und 400) verläuft.

3. Vorrichtung nach Anspruch 1, dadurch gekennzeichnet, dass die Plattform (100) verschwenkbar zwischen ihrer waagrechten Ruhestellung, in der eine Palette (210 oder 220) auf Referenzstellen (321) der Einspannanordnung (320) der Bearbeitungsstation (300) der Werkzeugmaschine (M) aufsetzbar ist und einer geneigten Stellung oberhalb der Einspannanordnung (320) angeordnet ist, in der die Palette (210 oder 220) von den Referenzstellen (321) freigegeben ist.

4. Vorrichtung nach Anspruch 1, dadurch gekennzeichnet, dass die Rotationsbewegung (Pfeil F) der Plattform (100) durchgeführt wird, während sich die Plattform (100) in der geneigten Stellung (Winkel a) befindet.

5. Vorrichtung nach Ansprüchen 1 und 2, dadurch gekennzeichnet, dass die theoretische waagrechte Achse (Z) eine Bewegung durchführt (Pfeil V), deren Richtung parallel zur senkrechten Ebene ist, die durch die Verbindungsachse der Stationen (300 und 400) verläuft.

6. Vorrichtung nach Ansprüchen 1 und 2, dadurch gekennzeichnet, dass die theoretische waagrechte Achse (Z), um welche die Plattform (100) verschwenkbar ist, in der Nähe der Bestückungsstation (400) angeordnet ist.

7. Vorrichtung nach der Gesamtheit der Ansprüche 1 bis 6, dadurch gekennzeichnet, dass sie eine Haube (500) aufweist, die sich einerseits aus einem unteren Abschnitt (510), der die vollständige Abdeckung der Plattform (100) gewährleistet und zugleich die Palettenträger (110 und 120) freiläßt und andererseits aus einem oberen Abschnitt (520) zusammensetzt, der eine Schutzhülle um diese Palettenträger (110 und 120) bildet und der in seinen senkrechten Wänden, die der Bearbeitungsstation (300) gegenüberliegen, mit Öffnungen (521 und 522) versehen ist, die den Zugang zu jedem Palettenträger (110 und 120) ermöglichen.

8. Vorrichtung nach Anspruch 7, dadurch gekennzeichnet, dass der untere Abschnitt (510) der Haube (500) kegelstumpfförmig ausgebildet ist, wobei seine überragenden seitlichen Wände (511) den Mechanismus der Einspannanordnung (320) der Bearbeitungsstation (300) der Werkzeugmaschine (M) schützen, unabhängig von der Stellung der Plattform (100), wobei die die Plattform (100) abdeckende Wand um die Palettenträger (110 und 120) herum derart ausgestaltet ist, dass eine Folge von Ebenen (512) gebildet ist, die derart ausgerichtet sind, dass die entstehenden Späne aufgrund der Schwerkraft in entsprechende Aufnahmebehälter geleitet werden.

9. Vorrichtung nach Anspruch 7, dadurch gekennzeichnet, dass die den oberen Abschnitt (520) der Haube (500) bildende Schutzhülle durch wenigstens eine senkrechte Abtrennung (523) derart unterteilt ist, dass Fächer (531 und 532) gebildet sind und die Palettenträger (110 und 120) voneinander getrennt sind.

10. Vorrichtung nach Ansprüchen 7 und 8, dadurch gekennzeichnet, dass der untere Abschnitt (510) der Haube (500) eine mittige Öffnung (513) aufweist, die oberhalb eines Aufnahmebehälters angeordnet ist und zu dem die Ebenen (512) in der inneren Hälfte eines jeden Faches (531 und 532) der Schutzhülle hin ausgerichtet sind, wobei die Ebenen (512) in der äußeren Hälfte der Fächer (531 und 532) nach außen der Vorrichtung (R) hin geneigt angeordnet sind zur Abfuhr in Richtung eines Aufnahmebehälters (330).

11. Vorrichtung nach Ansprüchen 7 und 9, dadurch gekennzeichnet, dass die Konturen der Zugangsöffnungen (521 und 522) eines jeden Faches der Schutzhülle der Haube (500) begrenzt sind unter Anpassung an die Konturen eines feststehenden Teils (340), das fest mit dem Bearbeitungskäfig der Werkzeugmaschine (M) verbunden ist, wenn die Werkstückpalette (210 oder 220) ihre Stellung in der Einspannanordnung (320) der Bearbeitungsstation (300) der Werkzeugmaschine (M) eingenommen hat, um dergestalt mit diesem Käfig einen während des Bearbeitungsschrittes hermetisch geschlossenen Raum zu bilden.

12. Vorrichtung nach einem der Ansprüche 1 bis 11, dadurch gekennzeichnet, dass die Verbindung und die Trennung der dem Einspannen der Palette (210 oder 220) dienenden Schaltkreise an die Schwenkbewegungen der Plattform (100) für das Wechseln der Werkstücke angepaßt sind.

## Claims

1. Rotary device (R) for changing parts to be machined by a machine tool (M), of the type of the one constitued by a table (100) which, comprising at least two pallet supports (110 and 120) arranged at regular angular intervals to each receive a part-carrying pallet (210 and 220), and mounted rotating (arrow F) between the machining station (300) of the machine tool (M) and the supplying post (400) of part-carrying pallets (210 and 220) arranged opposite said machining station (300), WHEREIN the said table (100) is mounted on one hand, pivoting (arrow F) about its central axis (Y), and on the other hand tilting between a horizontal position and a inclined position (angle "a") relative to the horizontal.

2. Device according to claim 1, WHEREIN the aforesaid table (100) is mounted tilting between the machining station (300) of the machine tool (M) and the supplying post (400) of part-carrying pallets (210 and 220), about a theoretical horizontal axis (Z) arranged orthogonally to the alignment axis of the said posts (300 and 400).

3. Device according to claim 1, WHEREIN the aforesaid table (100) is mounted tilting from its resting horizontal position where a pallet (210 or 220) is positioned on the references (321) of clamping module (320) of machining station (300) of machine tool (M) towards an inclined position above said clamping module (320) where pallet (210 or 220) is freed from the said references (321).

4. Device according to claim 1, WHEREIN the rotation movement (arrow F) of the aforesaid table (100) is operated during the inclined position (angle "a") of the said table.

5. Device according to claims 1 and 2, WHEREIN the aforesaid theoretical axis (Z) follows a movement (arrow V) of which the direction is parallel to the vertical plane running through the alignment axis of the said posts (300 and 400).

6. Device according to claims 1 and 2, WHEREIN the aforesaid theoretical horizontal axis (Z) around which the aforesaid table (100) tilts, is situated near the aforesaid supplying post (400).

7. Device according to claims 1 to 6 taken together, WHEREIN it comprises a cover (500) comprising on one hand, a lower part (510) ensuring complete protection of the table (100) while leaving the pallet supports (110 and 120) free, and on the other hand an upper part (520) defining a protection shield around the said pallet supports (110 and 120) and fitted with openings (521 and 522) to authorize access to each pallet support (110 and 120) on its vertical walls destined to face the machining station (300).

8. Device according to claim 7, WHEREIN the lower part (510) of cover (500) is made in the shape of a truncated cone of which the protuding lateral walls (511) protect the mechanism of the aforesaid clamping module (320) of machining station (300) of machine tool (M) whatever the position of the aforesaid table (100) and of which the wall covering table (100) around the aforesaid pallet supports (110 and 120) is made of a succession of planes (512) oriented so that the chips are led by gravity to corresponding collection troughs.

9. Device according to claim 7, WHEREIN the aforesaid protection shield forming the upper part (520) of cover (500) is separated by a vertical partition wall (523) so as to demarcate two compartments (531 and 532) ensuring the separation between the said pallet supports (110 and 120).

10. Device according to claims 7 and 8, WHEREIN the lower part (510) of cover (500) comprises a central orifice (513) situated above the collection trough and to which are oriented planes (512) situated in the inside half of each compartment (531 and 532) of the protection shield, planes (512) situated in the outside half of the said compartments (531 and 532) take an inclined position towards the outside of the rotary device (R) so as to enable the discharge to a collection trough (330).

11. Device according to claims 7 and 9, WHEREIN the rims of the opening access (521 and 522) of each compartment of the upper protection shield of the said cover (500) are demarcated in accordance with the rims of a fixed part (340) integral with the machining cubicle of the aforesaid machine tool (M) when part-carrying pallet (210 or 220) is in position on the clamping module (320) of machining station (300) of the machine tool (M) so as to form a sealed parameter during machining with the said cubicle.

12. Device according to any of the claims 1 to 11, WHEREIN the connection and disconnection of the circuits used for the clamping of the pallet (210 or 220) are subject to the tilting movement of the aforesaid table (100) for changing the parts.
